# EUROPEAN PATENT APPLICATION

(11) **EP 0 817 393 A2**
(43) Date of publication of application: **07.01.1998**
(21) Application number: 97110371.8
(22) Date of filing: 25.06.1997
(51) Int. Cl.: H04B 1/38

(54) **Portable power source with visual image display**

(30) Priority: 01.07.1996 US 673552
(71) Applicant: MOTOROLA INC., Schaumburg, Illinois 60196 (US)
(72) Inventor: Wright, Phil, Scottsdale, Arizona 85260 (US); Richard, Fred V., Scottsdale, Arizona 85260 (US); Jachimowicz, Karen E., Laveen, Arizona 85339 (US); Carns, William E., Fopuntain Hills, Arizona 85268 (US)
(74) Representative: Hudson, Peter David

(57) **Abstract**

A portable power source with miniature visual image display including a housing (14) having positioned therein a power source (12), such as a battery, a miniature visual image display (16), such as a miniature virtual image display, electronics (35) and an electrical interface connection (19), such as a mounting plug, for disconnectable attachment of the portable power source (12) to a portable electronic device (10), such as a portable communications transceiver. The miniature visual image display (16) being retractably mounted within the housing (14) of the portable power source (12). The miniature visual image display (16) capable of positioning by the user so as to align the viewing aperture (26) of the display (16) to the line of sight of the user.

## Description

### Field of the Invention

The present invention pertains, generally, to portable electronic devices and, more particularly, to an accessory power source with visual image display designed for use with portable electronic devices.

### Background of the Invention

Portable communications transceivers, such as cellular and cordless telephones, pagers and the like, are becoming increasingly popular. In some instances it is possible to send complete messages, including alpha-numerics and/or graphics by way of novel pagers. In many instances it is desirable to provide a visual display on the communications transceiver to supply the operator with a visual message or graphical image. The problem is that the visual displays on prior art communications receivers are extremely limited in size and require relatively high electrical power as well as a great amount of area to be sufficiently large to produce a useful display.

In the prior art, for example, it is common to provide visual displays utilizing liquid crystal displays, directly viewed light emitting diodes, etc. These produce very large and cumbersome displays that greatly increase the size of the transceiver and require relatively large amounts of power. Further, such displays, when used on small electronic devices, such as pagers, greatly limit the amount of message that can be received.

In one instance, the prior art includes a scanning mirror to produce a visual display but again this requires relatively large amounts of power and is very complicated and sensitive to shock. Also, the scanning mirror causes vibration in the unit that substantially reduces visual comfort and acceptability.

This desire for a visual image display in conjunction with a portable electronic device while of interest to many individuals to allow greater flexibility in the receiving and transmitting of information, raises concern regarding the initial cost of hardware to obtain such flexibilities. In this instance, accessories and or add-on components for existing devices become of interest, thus allowing many individuals to keep cost to a minimum, while allowing others to purchase additional accessories and/or add-on components as the need for improved technological capabilities arise.

Accordingly, a device that serves as an accessory for a portable electronic device, that has contained therein a miniature visual image display, such as a miniature virtual image display, would be highly advantageous.

It is a purpose of the present invention to provide for a new and improved portable power source for existing portable electronic devices, that includes a miniature visual image display, such as a miniature virtual image display.

It is a further purpose of the present invention to provide a new and improved portable power source for existing portable electronic devices with miniature visual image display where the display module is an extension of an accessory power source to now existing portable electronic devices.

It is a still further purpose of the present invention to provide a new and improved portable power source for existing portable electronic devices with miniature visual image display in which the portable electronic device and portable power source are easily connected and disconnected.

It is another purpose of the present invention to provide a new and improved portable power source for existing portable electronic devices with a miniature visual image display having a viewing aperture that is adjustable dependent upon individual user preferences.

### Summary of the Invention

The above described problems are at least partially solved and the above purposes are realized in a portable power source for use with portable electronic devices, including a housing and a miniature visual image display attached to the housing so as to be capable of positioning in a pop-out operational mode and a retracted non-operational storage mode. The portable power source being capable of physical and electrical attachment to a portable electronic device by an easily connectable and disconnectable structure. During operation, the portable electronic device, such as a cellular telephone, is positioned to physically and electrically engage the portable power source with miniature visual image display, thereby serving as a power source for the portable electronic device and allowing for the transmission of data between the portable electronic device and the visual image display. The miniature visual image display includes a viewing aperture positioned within the line of sight of the user when the miniature visual image display is in the operational mode, adjustable dependent upon the user preference. In the preferred embodiment, the miniature visual image display includes an image generation apparatus for providing a two-dimensional complete image and a fixed optical system for producing, from the complete image, a virtual image viewable and perceivable through the viewing aperture. The miniature visual image display of the portable power source includes a graphical user interface between the portable electronic device and the miniature visual image display.

### Brief Description of the Drawings

The novel features believed characteristic of the invention are set forth in the claims. The invention itself, however, as well as other features and advantages thereof will be best understood by reference to detailed descriptions which follow, when read in conjunction with the accompanying drawings, wherein:
FIG. 1 is a view in perspective of a portable cellular telephone having attached thereto a first embodiment of a portable power source with visual image display according to the present invention;
FIG. 2 is a top view, similar to FIG. 1, with the cellular telephone and miniature visual image display in a closed positioned;
FIG. 3 is a side view, similar to FIG. 1, with the cellular telephone positioned just prior to electrical and physical attachment to the portable power source of the present invention;
FIG. 4 is perspective view of the portable power source with miniature visual image display of the present invention;
FIG. 5 is cross-sectional view as seen through line 5-5 of FIG. 4 of the portable power source with miniature visual image display according to the present invention;
FIG. 6 is a view in perspective of a portable cellular telephone having attached thereto a second embodiment of a portable power source with visual image display according to the present invention;
FIG. 7 is a cross-sectional view as seen through the portable power source with miniature visual image display of FIG. 6 when the miniature visual image display is in a closed position;
FIG. 8 is a simplified schematic view of a miniature visual display of the portable power source of the present invention;
FIG. 9 is a simplified block diagram of a portion of the apparatus of FIG. 8;
FIG. 10 is a view in top plan of a portion of the apparatus of FIG. 9;
FIGS. 11, 12, and 13 are top, front and side views of a portion of the portable power source with miniature visual display of the present invention;
FIG. 14 is an enlarged side view of the apparatus of FIG. 13;
FIG. 15 is a block diagram of another visual display for the portable power source with miniature visual display of the present invention; and
FIG. 16 is a view in perspective illustrating a typical view as seen by the operator of the portable power source with miniature visual image display when mated with the portable communications transceiver as illustrated in FIG. 1.

### Detailed Description of the Drawings

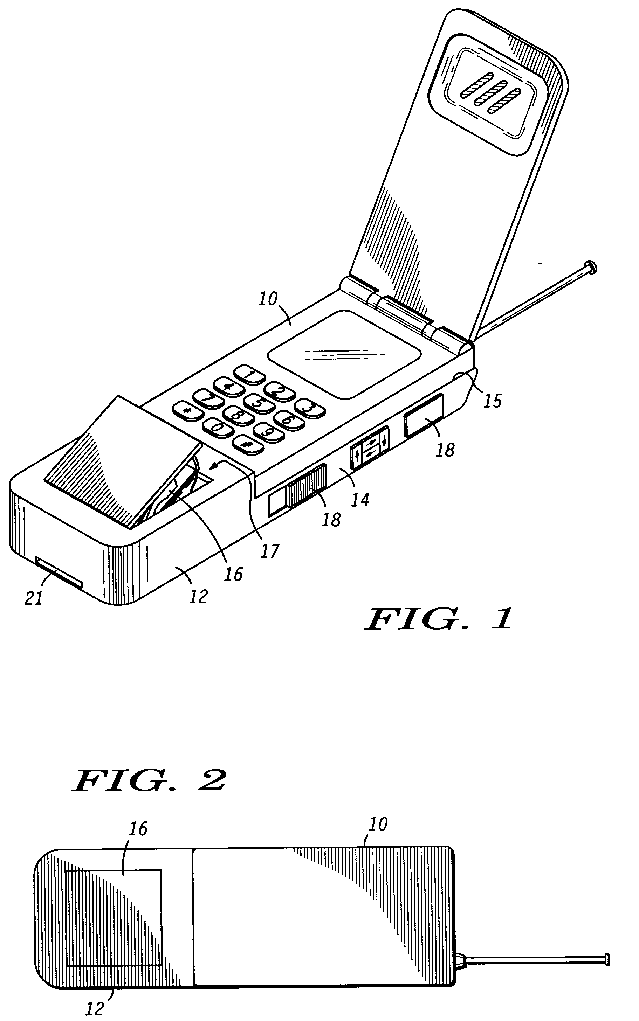

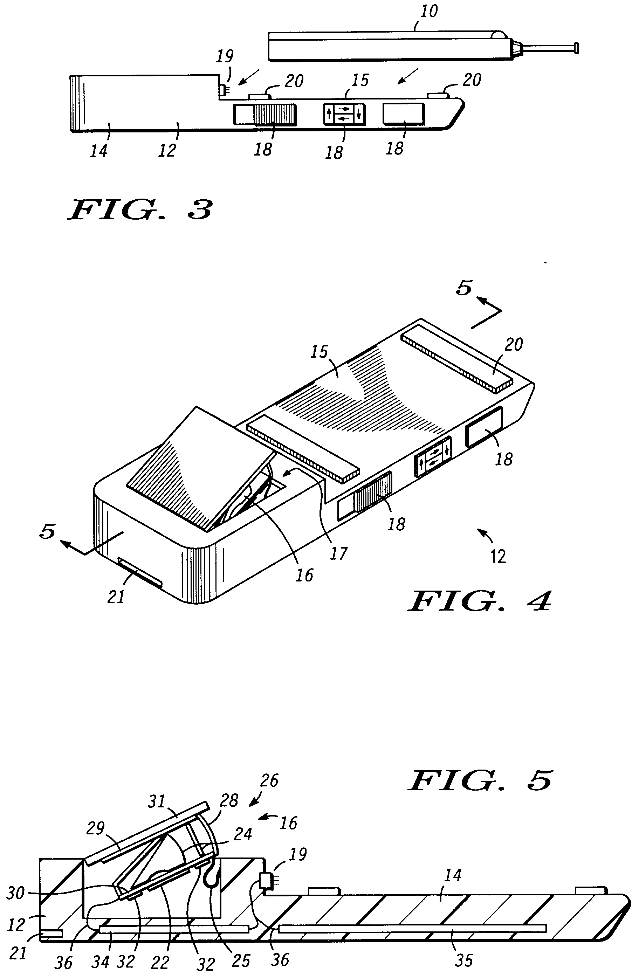

Referring now to the drawings, FIGS. 1-3 illustrate a portable communications transceiver 10 mounted in a portable power source with miniature visual image display 12 of the present invention. It should be understood that portable communications transceiver 10 is illustrated for purposes of explanation as to a first and second embodiment of the portable power source with miniature visual image display 12 described herein and is not intended as a separate inventive device to which separate claim language has been drawn. Referring more specifically to FIG. 1, portable power source with miniature visual image display 12 includes a housing 14 having positioned therein display components and defining a resting plate 15 for positioning of portable communications transceiver 10. In the preferred embodiments, the miniature visual image display is described as a miniature virtual image display (discussed presently). It should be understood that alternatively, the miniature visual image display could be a direct view display (not shown) dependent upon the intent of the accessory portable power source with miniature visual image display 12. For simplicity the miniature visual image display disclosed as a part of portable power source 12 will hereinafter be referred to as a miniature virtual image display 16. In this embodiment, miniature virtual image display 16 is rotatably and retractably mounted so as to permit movement between an operational and retracted position within an opening 17 formed in housing 14. When not in operation, miniature virtual image display 16 is hidden from view, enclosed and protected within housing 14 of portable power source 12 as shown in FIGS. 2 and 3. Miniature virtual image display 16 may also be enclosed within its own housing, having a protective window formed therein, thus allowing the user to manually adjust the orientation of the viewing aperture through which the image would be viewed. This housing would be totally contained and mounted so as to permit retraction into housing 14 when miniature virtual image display 16 is not in use. It should be understood that in the illustrated embodiment there is provided means for sealing about opening 17, such as a flexible shield 25 (as shown in FIG. 5), affixed between opening 17 and miniature virtual image display 16, to prevent dust, moisture, etc. from entering opening 17 formed in housing 14 and affecting circuits and other components.

During operation, miniature virtual image display 16 is positioned in an open or "pop-up" position as shown in FIG. 1. Once the operator of portable communications transceiver 10 has mounted portable communications transceiver 10 on resting plate 15 of portable power source 12 (shown separate and apart from portable communications transceiver 10 in FIG. 4) and thus electrically interfaced the two components (discussed presently), the miniature virtual image display 16 is adjusted to align a viewing aperture (discussed presently) of miniature virtual image display 16 within the operator's line of sight when the complete unit is held properly. Accordingly, in this embodiment, miniature virtual image display 16 is pivotally mounted so as to allow rotation in azimuth as well as in elevation, by rotating miniature virtual image display 16 about an axis perpendicular to an operable portion of housing 14 (described presently) and by raising or lowering the operable portion of housing 14. More specifically, miniature virtual image display 16 is pivotally mounted to permit movement about two orthogonal axes, more specifically right/left/up/down rotational movement, in relation to the body of the portable communications transceiver 10, dependent upon the user's positioning of transceiver 10, when miniature virtual image display 16 is in an open or "pop up" position. Once the azimuth and elevation angles of display 16 are adjusted for a given user, the display would pop-up in a "ready-to-use" position for that user.

As stated, portable power source with miniature visual image display 12 is intended for use with any number of portable electronic devices, such as portable communications transceiver 10. It will of course be understood that portable communications transceiver 10 is shown for illustrative purposes only and portable power source with miniature visual image display 12 can be used as an accessory or add-on component with any of the well known portable communications transceivers, such as a cellular telephone, cordless telephone, two-way radio, pager, or the like currently on the market. In addition, portable power source with miniature visual image display 12 is intended for use with other portable electronic devices wherein a virtual image display would be beneficial, such as a portable smart card reader, similar to that disclosed in U.S. Patent application, Serial No. 08/625,654, entitled "SMART CARD READER WITH VISUAL IMAGE DISPLAY", filed March 29, 1996, assigned to the same assignee, and incorporated herein by this reference. As previously stated, in the present embodiment, for purposes of explanation only, portable communications transceiver 10 is a portable cellular telephone.

In general, portable communications transceiver 10 includes a control panel for initiating calls and a standard visual display, if desired, for indicating the number called, the number calling, etc. There is typically provided in portable communications transceiver 10 a means for electrical interface, thus electrical communication, with an external power source, typically, an external battery power source or charging station. This means for electrically interfacing with an external component is generally formed as an electrical interface connection or "mounting plug", having a recessed interface formed in portable communications transceiver 10 and a cooperating protruding interface formed in the external accessory, power source or charging station. Typically, portable communications transceiver 10 is hand held by an operator so that audio is heard in the ear and the operator can simultaneously talk into a microphone. When portable power source 12 of the present invention is electrically interfaced with portable communications transceiver 10, the unit remains hand held and the operator is able to view a virtual image through miniature virtual image display 16.

Housing 14 of portable power source 12 further includes electronics (discussed presently) for service as an accessory power source, similar to standard battery power sources presently on the market. It should be understood that while portable power source 12 is disclosed as including a power source, such as a battery, it is anticipated by this disclosure that miniature virtual image display 16 can be included in an alternative form of an accessory component that does not include a power source. In this instance, the power source formed integral with portable communications transceiver 10 would serve to additionally power the miniature virtual image display 16.

There are provided a plurality of user interface controls 18 on housing 14 of portable power source 12, electrically interfaced to provide control of the miniature virtual image display 16, when portable power source 12 with miniature virtual image display 16 is electrically interfaced with portable communications transceiver 10. User interface controls 18 include standard operations, such as an OFF-ON control, which "pops-up" display 16 into a ready-to-use position, as well as input to standard graphical user interfaces (GUIs), such as a virtual cursor image interfaced with cursor electronics within miniature virtual image display 16, controlled using a plurality of directional movement control keys, such as a finger control device, a miniature trackball or a touch pad, etc.

Portable power source 12 is fabricated dependent upon the specific portable electronic device it is intended for use with so as to be readily connectable and disconnectable (physically and electrically) from the portable electronic device. The term "readily connectable and disconnectable" is defined for purposes of this disclosure as quickly separable and reconnectable by the operator without requiring special tools or knowledge. Referring more specifically to FIG. 3, illustrated in side view are portable communications transceiver 10 and portable power source 12 prior to mating and/or interconnection of the two components. As illustrated in this specific embodiment, portable power source 12 is physically attached to portable communications transceiver 10 and electrically interfaced with portable communications transceiver 10 by means of an electrical interface connection or mounting plug 19 as previously described, more specifically in this embodiment a protruding plug interface formed generally on the accessory component, such as portable power source 12 and a cooperating recessed interface, formed on portable communications transceiver 10 (not shown), into which the protruding plug interface is mounted. The electrical connection between portable communications transceiver 10 and portable power source 12 is made through this simple electrical connection which manually plugs the two components together. It will of course be understood that there is provided additional stabilizing connections between portable communications transceiver 10 and portable power source 12, such as protruding snap-in connections or mating interlocking structures 20, which additionally in a more refined embodiment, may serve as the electrical interface connection between the components. In addition, there is provided a recessed mounting plug 21 (illustrated in FIGS. 1 and 4) formed in portable power source 12 so as to allow for the positioning of the complete unit within an external charging station, etc.

Thus, the complete unit, portable communications transceiver 10 and portable power source 12 can be carried together in a brief case, etc. when the complete miniature virtual image display 16 is not needed, the two components can be disconnected and carried separately, either component being clipped on a belt, in a pocket, in a wallet, etc. Furthermore, when the portable power source 12 with miniature virtual image display 16 has mounted thereto, portable communications transceiver 10, the user can receive extensive messages (i.e. facsimiles, phone numbers, images, e-mail, etc.). The portable communications transceiver 10 by itself is a very small, low power, lightweight device and, when connected to portable power source 12 with miniature virtual image display 16, maintains its lightweightness, yet the user has complete receiving and transmitting capabilities, as well as phone services. Typically, the portable communications transceiver 10, has positioned therein a power source, so as to be a stand alone operational unit, that when connected to the portable power source 12 of the present invention, which serves as an accessory or add-on component, has the added benefit of additional power, as well as the miniature virtual image display 16.

In the preferred embodiment, portable power source 12 is constructed so as to include miniature virtual image display 16. To aid in understanding this component of the invention, a simplified sectional view through portable power source 12, including miniature virtual image display 16, as seen from line 5-5 in FIG. 4, is illustrated in FIG. 5. Miniature virtual image display 16 includes an image generation apparatus 22 (discussed presently) for providing a complete image to a fixed optical system 24, which in turn produces a virtual image viewable by the operator through an aperture 26. Fixed optical system 24 is constructed to magnify the entire complete image from image generation apparatus 22, without utilizing moving parts, so that the virtual image viewable through aperture 26 appears to be very large and is easily discernible by the operator.

By producing a greatly magnified (>x10) virtual image from the very small image of image generation apparatus 22, fixed optical system 24 can be constructed relatively small. Optical system 24 is constructed with no moving parts, other than optional features such as focusing, zoom lenses, rotational positioning (discussed previously), etc. Further, image generation apparatus 22 requires very little electrical power to generate the complete image and, therefore, the power output by portable power source 12 is sufficient to operate portable communications transceiver 10 and miniature virtual image display 16. There is provided on an exterior surface of miniature virtual image display 16, positioned to cover optical system 24 a protective lens or enclosure 28 so as to protect optical system 24 from abrasions, dust, etc. and act as a filtering element, thereby enhancing the image as viewed by the user. Alternatively, the outermost optical element of optical system 24 has coated on an exterior surface, an abrasion resistive coating such as magnesium fluoride to prevent abrasions to the optical element.

As illustrated, image generation apparatus 22 is typically mounted on a printed circuit board 30, such as a standard FR4 PCB or a patterned glass substrate, and has additionally mounted thereon a plurality of driver circuits 32. In general, and as schematically illustrated, mounting plug 19 is electrically interfaced with a PCB board 34, electronics 35 and miniature virtual image display 16 using any known standard type of electrical interface currently used in the art, including a plurality of flexible cables 36 as illustrated in FIG. 5.

As illustrated in FIG. 5, in a first embodiment, miniature virtual image display 16 is adjustably mounted as a component to a substantially planar member 29. Planar member 29 is rotatably mounted to an operable portion 31 of housing 14 so as to align miniature virtual image display 16 substantially coextensive with the operable portion 31, thereby permitting movement along a plurality of axes, more specifically an up/down/right/left movement of miniature virtual image display 16 relative to housing 14, dependent upon the preferred alignment of aperture 26 within the user's line of sight. It should be understood that planar member 29 can be formed as a separate member, as a component of miniature virtual image display 16, or alternatively as simply the lower aspect of operable portion 31 of housing 14.

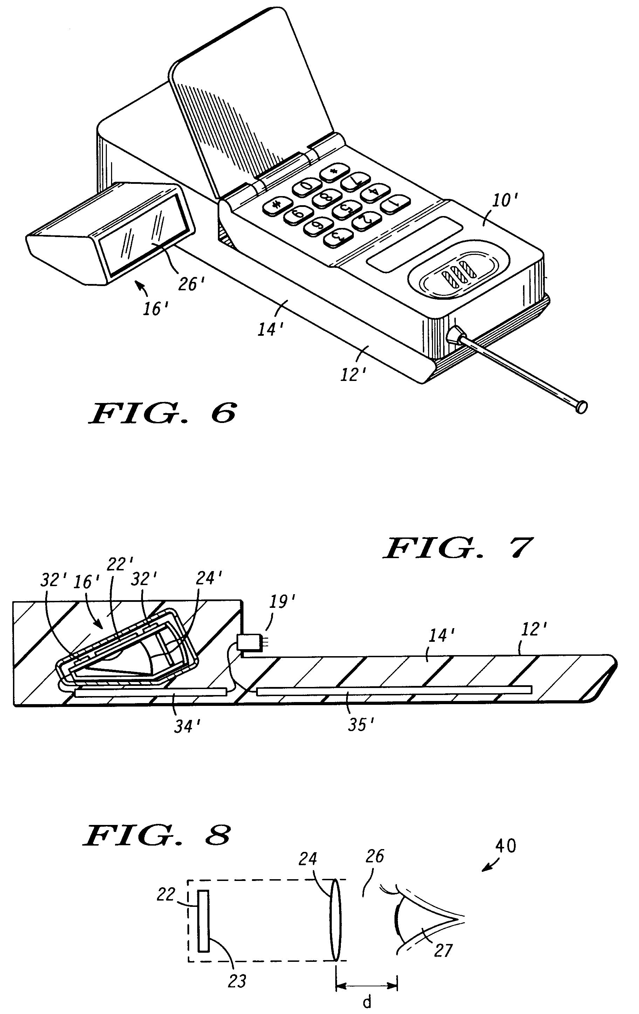

Referring now to FIGS. 6 and 7, illustrated is a second embodiment of a portable power source with miniature visual image display of the present invention. It should be noted that all components similar to the components illustrated in FIGS. 1 - 5, are designated with similar numbers, having a prime added to indicate the different embodiment. Referring more specifically to FIG. 6, illustrated is a portable communications transceiver 10' connected to a portable power source with miniature visual image display 12' according to a second embodiment. As illustrated, portable communications transceiver 10' has formed as a part thereof, a lower "flippable" portion that serves as a microphone for transceiver 10' and/or a protective cover when transceiver 10' is in a closed, non-operational position. Accordingly, a miniature visual image display, more specifically a miniature virtual image display 16', of portable power source with miniature visual image display 12', is positioned to align a viewing aperture 26' within the user's line of sight when portable communications transceiver 10' is operational, thus the "flippable" portion is in an open position. It should be understood that while portable communications transceiver 10' is disclosed as having a "flippable" portion, portable power source 12' is anticipated for use with a portable communications transceiver that does not have a "flippable" portion. As illustrated in FIG. 6, viewing aperture 26' of portable power source 12' is slideably mounted within housing 14', more specifically miniature virtual image display 16' is mounted within an operable portion 31' of housing 14'. During operation, the user would manually and/or electronically move or "slide" miniature virtual image display 16' to an operational position, thereafter rotatably adjusting the viewing aperture 26' dependent upon user preferences. Miniature virtual image display 16' has programmed into the electronics, a switch to control orientation of the image viewed through aperture 26'. More specifically, miniature virtual image display 16' has provided the capability to orient the generated visual image being viewed through aperture 26', dependent upon portable communications transceiver 10' being held by the user in a right-hand or left-hand position so as to be readable by all users.

Referring now to FIG. 7, illustrated in sectional view, is miniature virtual image display 16' positioned within housing 14'. Miniature virtual image display 16' includes an image generation apparatus 22' (discussed presently) for providing a complete image to a fixed optical system 24', which in turn produces a virtual image viewable by the operator through aperture 26'. Fixed optical system 24' is constructed to magnify the entire complete image from image generation apparatus 22', without utilizing moving parts, so that the virtual image viewable through aperture 26*'* appears to be very large and is easily discernible by the operator.

As illustrated, miniature virtual image display 16' is packaged similarly to miniature virtual image display 16, previously described. Due to housing constraints of power source 12', miniature virtual image display 16' is illustrated as being oriented in an opposed manner than miniature virtual image display 16 relative to a lower aspect of housing 14', thereby permitting for complete encapsulation of miniature virtual image display 16' within housing 14'.

Miniature virtual image display 16 and 16' will now be described in more detail with reference to FIGS. 8 - 14. Referring specifically to FIG. 8, an example of a compact virtual image display 40 is illustrated in a simplified schematic view. Components of the compact virtual image display of FIG. 8 which are similar to components of miniature virtual image display 16 of FIG. 5 are designated with similar numbers so that correlation between the devices can be readily achieved. Virtual image display 40 includes an image generation apparatus 22 for providing a complete image on a surface 23. An optical system, represented by lens 24, is positioned in spaced relation to surface 23 of image generation apparatus 22 and, in cooperation with image generation apparatus 22, produces a virtual image viewable by an eye 27 spaced from an aperture 26 defined by lens 24.

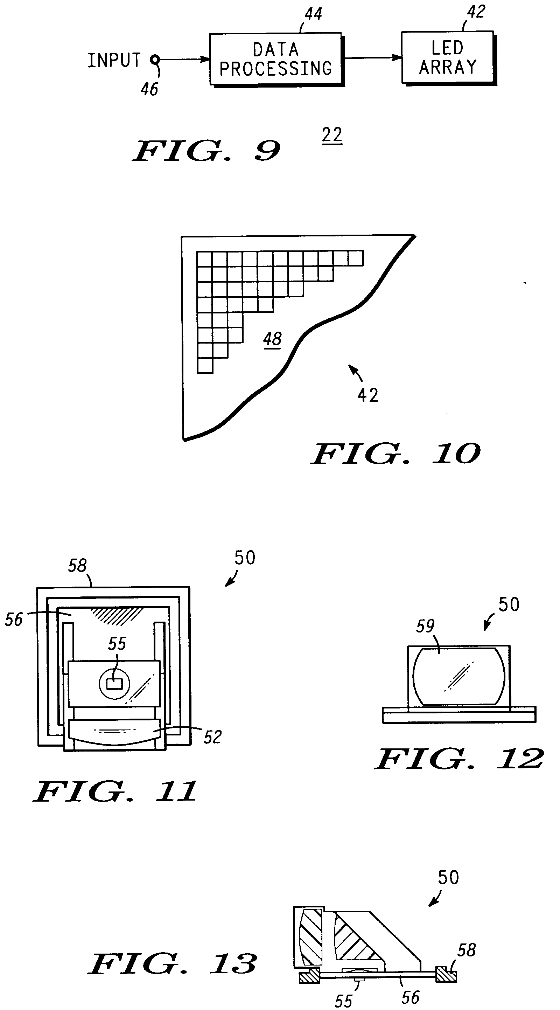

Image generation apparatus 22 is illustrated in more detail in FIG. 9 and includes, for example, semiconductor electronics such as a two-dimensional light emitting device (LED) array 42 driven by data processing circuits 44. Data processing circuits 44 include, for example, logic and switching circuit arrays for controlling each LED in LED array 42. Data processing circuits 44 include, in addition to or instead of the logic and switching arrays, a microprocessor or similar circuitry for processing input signals at input terminal 46 to produce a desired complete image on a device such as LED array 42. It will be understood that data processing circuits 44 and LED array 42, while illustrated separately for purposes of this description, could be formed on the same semiconductor chip in some applications.

In this specific embodiment LED array 42 is utilized because of the extremely small size that can be achieved and because of the simplicity of construction and operation. It will of course be understood that the term light emitting devices includes, but is not limited to semiconductor diodes, organic diodes, field emission devices, lasers, such as vertical cavity surface emitting lasers (VCSELs), etc. Referring specifically to FIG. 10, a plan view of LED array 42 is illustrated in which the LEDs are formed in a regular pattern of rows and columns on a single semiconductor chip 48. Portions of semiconductor chip 48 are broken away to simplify the drawing but it should be understood that many of the other circuits to be described herein could be included on the same chip. By addressing specific LEDs by row and column in a well known manner, the specific LEDs are energized to produce a complete image. Digital or analog data is received at input terminal 46 and converted by data processing circuits 44 into signals capable of energizing selected LEDs to generate the predetermined complete image.

It will be understood by those skilled in the art that two-dimensional LED array 42 and semiconductor chip 48 are greatly enlarged in the figures. General, semiconductor chip 48 ranges from approximately 2 centimeters on each side to 1 millimeter on each side and, in a preferred embodiment of the present invention, the size of array 42 ranges from 1.0 centimeter on a side to 0.1 centimeter on a side. Further, each light emitting device or pixel ranges in size approximately from 50.0 microns to 0.25 micron on a side having a preferred range from 20.0 microns to 0.5 micron. It should be understood that the actual light emitting device array is much smaller, because bonding pads, etc. add several millimeters of area on each side. Generally, the larger size chips simply mean that more light emitting devices are used in the array to provide more definition, color, etc.

It will be understood by those skilled in the art that additional magnification may be included if desired. The lens system, represented schematically by lens 24, is mounted in spaced relation from surface 23 of image generation apparatus 22 so as to receive the image from surface 23, magnify it an additional predetermined amount and create the aperture 26 within which the virtual image is viewed. Generally, a magnification of at least ten is required to magnify the complete image sufficiently to be perceived by a human eye. It will of course be understood that the lens system may be adjustable for focus and additional magnification, if desired, or may be fixed in a housing for simplicity.

Eye relief is the distance that eye 27 can be positioned from lens system 24 (the viewing aperture 26) and still properly view the image, which distance is denoted by "d" in FIG. 8. Because of the size of lens 24, eye relief, or the distance d, is sufficient to provide comfortable viewing and in the present embodiment is great enough to allow a viewer to wear normal eyeglasses, if desired.

FIGS. 11, 12 and 13 illustrate a top plan view, front view, and side elevation, respectively, of a miniature virtual image display 50 which, in a preferred embodiment, is used as miniature virtual image display 16 in portable power source 12. Miniature virtual image display 50 incorporates a single fold optical magnifier 52. FIGS. 11, 12 and 13 illustrate miniature virtual image display 50 approximately the actual size to provide some indication as to the extent of the reduction in size achieved by the apparatus. Miniature virtual image display 50 includes image generation apparatus 55, generally similar to image generation apparatus 22, previously described, with an array of light emitting devices, such as organic or inorganic light emitting diodes, field emission devices, vertical cavity surface emitting lasers (VCSELs), liquid crystal devices (LCDs), etc. In this specific embodiment, image generation apparatus 55 includes an array of light emitting devices, more specifically an array containing 144 rows and 240 columns, or vice versa, of light emitting devices. Each light emitting device is fabricated approximately 20 microns on a side with a center-to-center spacing between adjacent devices of no more than 20 microns. Each light emitting device is turned ON with approximately 1.8 volts and utilizes approximately 50µA of current when it is turned ON. Image generation apparatus 55 produces a luminance less than approximately 15 fL.

Image generation apparatus 55 is mounted on the under-surface of a glass substrate 56 and a driver board 58 is bump-bonded to substrate 56. Additional information on driver boards and bonding of substrates to the driver boards is disclosed in United States Patent No. 5,432,358, entitled "INTEGRATED ELECTRO-OPTICAL PACKAGE", issued July 11, 1995 and assigned to the same assignee, which information is included herein by reference.

Single fold optical magnifier 52 is also mounted on substrate 56 and includes a plurality of optical elements defining a light path from image generation apparatus 55 to a viewing aperture 59, best seen in FIG. 12. The plurality of optical elements are constructed to angularly magnify images, generated by image generation apparatus 55, at a light inlet of a first optical element by greater than ten. Because of the length of the optical path and the size of image generation apparatus 55 (the image source), the horizontal field of view of the optics ranges from approximately 11 degrees at a magnification of 10x to 22 degrees at a magnification of 20x, with the present embodiment having a horizontal field of view of approximately 16 degrees and a magnification of 15x.

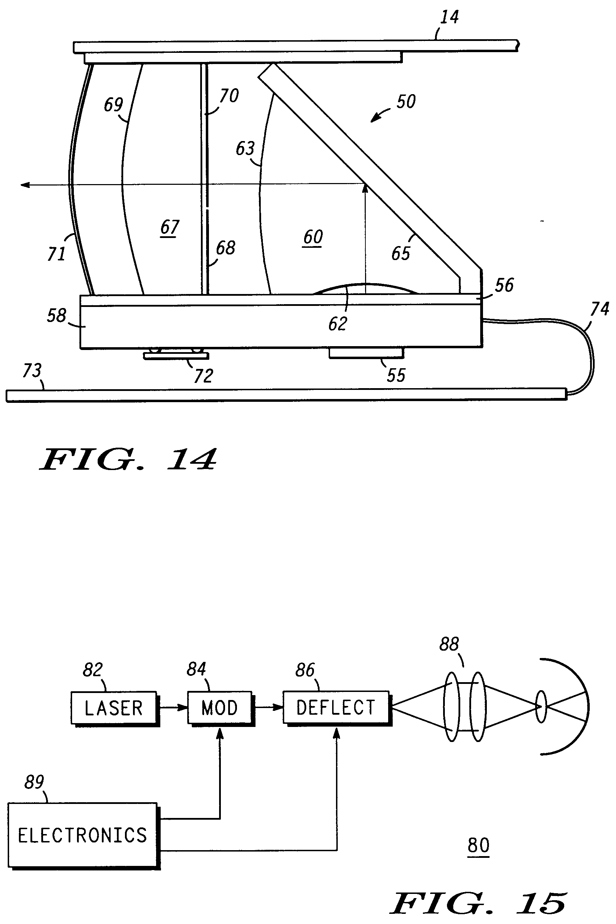

Referring specifically to FIG. 14, a 4x magnified view in side elevation of portions of miniature virtual image display 50 of FIG. 11 is illustrated for clarity. From this view it can be seen that the plurality of optical elements includes a first optical element 60 having an aspheric field flattening light inlet 62, a spheric surface serving as a light outlet 63 and a reflecting surface 65 optically positioned between aspheric field flattening light inlet 62 and light outlet 63 so as to direct light from aspheric field flattening light inlet 62 to light outlet 63. In this specific embodiment, first optical element 60 is formed as a prism and is molded from an optical quality plastic. Generally, it is understood that optical quality plastic is material having a high index of refraction, between approximately 1.5 and 1.6. Reflecting surface 65 may be a separate silvered mirror that is simply molded into first optical element 60, or reflecting surface 65 can be silvered after formation of first optical element 60, or reflecting surface 65 can be uncoated and used in a total internal reflection mode.

In this embodiment, aspheric field flattening light inlet 62 takes the form of an aspheric field flattening concave surface molded directly into first optical element 60 and formed as an integral part thereof. It will be understood, however, that aspheric field flattening light inlet 62 could be formed as a separate lens and subsequently positioned in optical alignment with the lower surface of first optical element 60. Separate components of course result in additional components and assembly steps which can increase the cost and size of the final structure.

Reflecting surface 65 is disposed, with respect to aspheric field flattening light inlet 62 and light outlet 63, to fold or bend light passing through first optical element 60 at an angle between approximately 80° to 100°. More specifically, in the embodiment illustrated, light is reflected at an angle of approximately 95°. It has been found, for example, that an angle of 95° avoids vignetting on the lower part of the image at the outlet of single fold optical magnifier 52.

A significant part of the design of miniature virtual image display 50 is the use of a solid, single fold prism with a convex outlet face to enable increased angular magnification (reduced effective focal length) in the same volume of space compared to the use of a simple turning mirror in the air.

The plurality of optical elements further includes an optical lens 67 having a light inlet 68, positioned adjacent light outlet 63 of first optical element 60, and a light outlet 69. In the specific embodiment illustrated, optical lens 67 is a hybrid refractive/diffractive optical lens having a diffractive surface on a base spherical surface defining light inlet 68 and an aspheric surface defining light outlet 69. Optical lens 67 is fixedly mounted relative to first optical element 60 by any convenient means including an outer housing (illustrated schematically in FIGS. 11 - 13), a mounting frame, or any other convenient structure. The aspheric/diffractive surfaces, including light outlet 69 and light inlet 68 of optical lens 67 and light outlet 63 and field flattening light inlet 62 of first optical element 60 are designed to reduce and/or eliminate any aberration in wavefront as it passes from field flattening light inlet 62 to light outlet 69 of optical lens 67.

The plurality of optical elements, including first optical element 60 and optical lens 67, define a light path from field flattening light inlet 62 of first optical element 60 to light outlet 69 of optical lens 67. To fabricate a single fold optical magnifier that is useful in the generation of a miniature virtual image, the total average optical length of the optical path should be in the range of approximately 15 to 35 millimeters. In this embodiment the optical path from field flattening light inlet 62 to the aspheric surface defining light outlet 69 of optical lens 67 is approximately 20 millimeters.

Also, the plurality of optical elements, including first optical element 60 and optical lens 67, are constructed to include at least one diffractive optical element positioned in the light path so as to provide additional, primarily chromatic (in this embodiment), aberration correction. In the embodiment illustrated, a diffractive optical element 70 is incorporated into the spherical surface defining light inlet 68 of optical lens 67. It will of course be understood that diffractive optical elements can, instead of or in addition to diffractive optical element 70, can be included in any other surface of the plurality of elements in miniature virtual image display 50. If a diffractive optical element is included in a surface that is substantially normal to the light path, as opposed to those in which the light strikes the surface at an angle, the diffractive optical element is somewhat easier to construct because of rotational symmetry, whereas surfaces on which light strikes at an angle have nonrotational symmetry. Because the aspheric surfaces and diffractive optical element 70 make optical lens 67 relatively complex, it has been found that fabrication of optical lens 67 is best done by injection molding.

First optical element 60 and optical lens 67 can be constructed to form a complete magnifier. Alternatively, additional optical elements may be included to form the complete optical magnifier such as a low power optical lens (not shown) as an example of possible extensions of the magnifier. The addition of a low power optical lens may add somewhat to the size and complexity of miniature virtual image display 50, but would provide some angular magnification and aberration correction that reduces the complexity of the various other elements, which can in many applications reduce the overall cost of miniature virtual image display 50. Because of its low power, a low power optical lens might also be used as the package window, or viewing aperture. In the illustrated embodiment in which only first optical element 60 and optical lens 67 are utilized the viewing aperture may be defined by a glass or plastic window 71, which may be clear, a light filter, etc., serving to protect miniature virtual image display 50.

In many applications it may be desirable to include apparatus for focusing the final image. To this end, first optical element 60 (and other elements 67 and low power lens, if desired) is mounted on substrate 56 by means of adjustment (not shown) which can be mechanically adjusted utilizing some exterior user control, such as user interface controls 18, (operated in a dual or secondary mode) to move the fixed assembly of elements 60, and 67 vertically toward and away from substrate 56 and image generation apparatus 55. Focusing is accomplished by simply changing the distance between field flattening light inlet 62 and the image generated on image generation apparatus 55.

In addition to the mounting of image generation apparatus 55 to driver board 58, a plurality of driver circuits 72 are shown mounted to driver board 58 to drive image generation apparatus 55 to generate a virtual image. Driver board 58 is shown electrically interfaced to electronics 73 contained within housing 14 of portable power source 12 utilizing a plurality of electrical interface connections such as flexible cable connections 74.

FIG. 15 is a block diagram of a direct retinal scan display 80, which might also be utilized as miniature virtual image display 16 and 16' of FIGS. 1-7. A laser 82, which may be any of the well known lasers including solid state lasers, such as vertical cavity surface emitting lasers (VCSELs), diode lasers, diode-pumped lasers, etc., supplies a coherent light beam to a modulator 84. Modulator 84 impresses video information onto the light beam generally by modulating the intensity of the light beam as, for example, by providing changes in the power level of laser 82. Depending upon the application, the modulation could be as simple as turning laser 82 off and on, which essentially translates into a digital system. Acousto-optic modulators are one of the preferred modulators for most applications, but other techniques, such as electro-optics and mechanical are completely feasible.

The modulated light beam from modulator 84 is directed to a deflection system 86. A lens system 88 is used to focus the light beam from deflection system 86 into an eye. The focal length of lens system 88 is chosen so that the scanning system focal point is within the pupil of the eye and the coherent beam focal point is at the retina of the eye.

Timing and control of modulator 84 and deflection system 86 is provided by electronics 89. Electronics 89 includes a basic oscillator, or timer, which provides the timing signals to cause the sweeping and modulating to occur at the proper times. Also, electronics 89 provides video signals to modulator 84 to modulate the light beam to the correct intensity at the required times. Further, electronics 89 provides horizontal and vertical (orthogonal) deflection signals to cause deflection system 86 to periodically scan the light beam in a raster. Depending upon the application and the desired image resolution, the horizontal deflection frequency may be on the order of 15 to 30 kHz., the vertical deflection is no lower than 60 Hz., and the modulating frequency may be on the order of 12 MHz.

The purpose of deflection system 86 is to scan the modulated light beam on the retina of the eye, or "write" an image on the retina. There are many possible configurations for deflection system 86 and lens system 88, depending upon the application of the display and how it is desired to form the image in the eye. Additional information on this type of display is available in a copending U.S. patent application entitled "DIRECT RETINAL SCAN DISPLAY", serial no. 08/292,193, filed August 18, 1994, assigned to the same assignee, which is a file wrapper continuation of U.S. patent application entitled "DIRECT RETINAL SCAN DISPLAY", serial no. 07/857,193, filed March 24, 1992. While the direct retinal scan display does not technically generate a virtual image, the direct retinal scan display is included in the definition of a virtual display apparatus for purposes of this disclosure because of the similarity thereto.

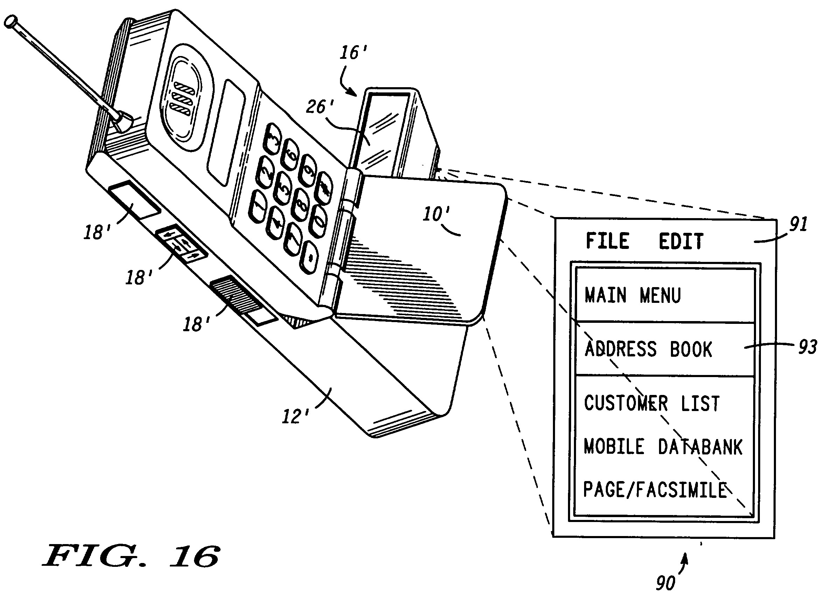

Referring specifically to FIG. 16, illustrated is a perspective view of portable communications transceiver 10' positioned within portable power source with miniature visual image display 12' of the present invention, illustrating a typical virtual image 90 seen by an operator looking into viewing aperture 26' of miniature virtual image display 16'. Virtual image 90, as seen in viewing aperture 26', features a pull-down menu 91, which is actuated to the pull-down position by operation of a user interface controls 18' (generally similar to user interface controls 18 previously described). In this particular example, pull-down menu 91 has been selected by placing a controllable virtual cursor image 93 on the pull-down selection name for pull-down menu 91, which is FILE. It is anticipated that a plurality of different pull-down menus will be provided which can be selected by manipulating user interface controls 18' to move virtual cursor image 93 to the desired title.

Pull-down menu 91 includes a variety of functions, or information selections as illustrated in FIG. 16. In this specific example, pull-down menu 91 includes an ADDRESS BOOK, which may include personal numbers stored in memory, or portions of a complete directory provided by, for example, the telephone base station. Pull-down menu 91 further includes a choice of PAGE/FACSIMILE information, which might include, for example, pages or fax messages received by portable communications transceiver 10' and stored in memory. The MOBILE DATA BANK function refers to access to future cellular phone base station data banks which, for example, might allow the operator to receive directions or maps to a particular business/restaurant, etc. of interest. Many other forms of graphical and/or alpha-numeric information might be available to the operator and easily selected by the operator through control of the cursor by manipulation of user interface controls 18'.

As illustrated, the operator has selected the second function illustrated on pull-down menu 91, i.e. ADDRESS BOOK, and selection of this function provides a virtual image in aperture 26' of miniature virtual image display 16' of data stored in an address book type format. In addition, there may be provided a function KEYBOARD which would replace the need for a physically large and cumbersome keyboard or control panel on portable communications transceiver 10'.

Thus, a portable power source with visual image display, typically a virtual image display, for use with portable electronic equipment, such as portable communications transceivers, pagers, smart card readers, data banks or the like is disclosed. A virtual image display is utilized and constructed within the portable power source, thereby providing for an accessory or add-on component to a portable electronic device. The display housed within the portable power source is very small and requires very little power. Further, because of the extremely small size and power consumption of the virtual image display, it is incorporated into the portable power source without substantially effecting the size of the portable power source or power requirements of the portable communications transceiver. When a portable electronic device, such as the portable communications transceiver as described herein, is connected to the portable power source with miniature visual image display the user has complete transmitting and receiving capabilities, as well as the ability to view high density information.

While we have shown and described specific embodiments of the present invention, further modifications and improvements will occur to those skilled in the art. We desire it to be understood, therefore, that this invention is not limited to the particular forms shown and we intend in the appended claims to cover all modifications that do not depart from the spirit and scope of this invention.

## Claims

1. A portable power source characterized by:
a housing (14), including a power source (12) positioned within the housing (14) and a miniature visual image display (16), mounted within the housing (14); and
an electrical interface connection (19) positioned on the housing (14) in electrical communication with the power source (12) and the miniature visual image display (16), the electrical interface connection (19) thereby providing for physical and electrical connection of a portable electronic device (10) to the portable power source (12).

2. A portable power source as claimed in claim 1 further characterized in that the miniature visual image display (16) is retractably and rotatably mounted within the housing (14).

3. A portable power source as claimed in claim 1 further characterized in that the miniature visual image display (16) is slideably mounted within the housing (14).

4. A portable power source as claimed in claim 1 further characterized in that the miniature visual image display (16) is a miniature virtual image display.

5. A portable power source as claimed in claim 1 further characterized in that the miniature visual image display (16) is a direct view display.

6. A portable power source as claimed in claim 1 further characterized in that the electrical interface connection (19) used to physically and electrically attach the portable power source (12) to the portable electronic device (10) is a disconnectable structure.

7. A portable power source as claimed in claim 6 further characterized in that the electrical interface connection (19) is a mounting plug.

8. A portable power source as claimed in claim 1 further characterized in that the portable electronic device (10) includes a portable communications transceiver, a smart card reader, and a data bank.

9. A portable power source as claimed in claim 8 further characterized in that the portable communications transceiver (10) includes a cellular telephone, a two-way radio, and a pager.

10. A portable power source characterized by:
a housing (14), including an operable portion;
a power source (12) positioned within the housing (14); and
a miniature virtual image display (16) having a viewing aperture (26) positioned within the housing (14) in alignment with the operable portion, the miniature virtual image display (16) being operably attached to a portable electronic device (10) through a means for electrical interface (19) and including an image generation apparatus (22) for providing a two-dimensional complete image and a fixed optical system (24) for producing, from the two-dimensional complete image, a virtual image viewable and perceivable through the viewing aperture (26).
